(19) Europäisches Patentamt
European Patent Office
Office européen des brevets

(11) Veröffentlichungsnummer: **0 036 383**
**B1**

(12) # EUROPÄISCHE PATENTSCHRIFT

(45) Veröffentlichungstag der Patentschrift: **21.12.83**

(51) Int. Cl.³: **C 07 C 147/12,** C 09 B 62/503

(21) Anmeldenummer: **81710008.4**

(22) Anmeldetag: **27.02.81**

(54) **Verfahren zur Herstellung von Beta-Sulfatoäthylsulfonyl-aminobenzaniliden.**

(30) Priorität: **11.03.80 DE 3009178**

(43) Veröffentlichungstag der Anmeldung: **23.09.81 Patentblatt 81/38**

(45) Bekanntmachung des Hinweises auf die Patenterteilung: **21.12.83 Patentblatt 83/51**

(84) Benannte Vertragsstaaten: **CH DE FR GB IT LI**

(56) Entgegenhaltungen:
**DE - A - 1 443 877**
**FR - A - 2 360 539**
**US - A - 3 679 649**

(73) Patentinhaber: **HOECHST AKTIENGESELLSCHAFT, Postfach 80 03 20, D-6230 Frankfurt am Main 80 (DE)**

(72) Erfinder: **Kohlhaas, Folker, Dr., Akazienring 64, D-6203 Hochheim am Main (DE)**
Erfinder: **Hoyer, Ernst, Dr., Eptingweg 3, D-6230 Frankfurt am Main 80 (DE)**
Erfinder: **Meininger, Fritz, Dr., Loreleistrasse 7, D-6230 Frankfurt am Main 80 (DE)**

**EP 0 036 383 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von β-Sulfatoäthylsulfonyl-aminobenzaniliden

Die vorliegende Erfindung liegt auf dem Gebiet der Herstellung von Zwischenprodukten für faserreaktive Verbindungen. Sie betrifft die Herstellung von β-Sulfatoäthylsulfonyl-aminobenzaniliden durch Veresterung von β-Hydroxyäthylsulfonyl-aminobenzaniliden mittels eines Sulfatisierungsmittels in einem Lösungsmittel.

Die Veresterung von solchen Verbindungen ist an sich bekannt. Die bisher beschriebenen Methoden erfordern jedoch sehr große Überschüsse an Schwefelsäure; diese überschüssige Schwefelsäure muß entweder bei der Aufarbeitung des Veresterungsproduktes und dessen Isolierung oder bei der Weiterverarbeitung des Veresterungsproduktes, z. B. zu Azofarbstoffen, mit Wasser verdünnt und neutralisiert werden und von dem Veresterungsprodukt oder dem Weiterverarbeitungsprodukt, wie dem Farbstoff, abgetrennt werden. Eine Rückgewinnung der Schwefelsäure ist somit praktisch ausgeschlossen. Die Säure belastet zudem als solche oder in neutralisierter Form als lösliches Sulfat das Abwasser.

Des weiten haben die bekannten Veresterungsverfahren den Nachteil, daß die Veresterungsprodukte als Lösungen in Schwefelsäure anfallen. Diese Lösungen sind aber für eine Lagerung, beispielsweise für eine später erfolgende Weiterverarbeitung, wenig geeignet, so daß sie sogleich der Weiterverarbeitung, zum Beispiel der Herstellung für Farbstoffe, zugeführt werden müssen.

Ein Veresterungsverfahren obiger Art ist beispielsweise aus der deutschen Patentschrift 1 126 547 bekannt, in welcher gemäß den Beispielen 1 und 2 4-Amino-3'-(β-hydroxyäthylsulfonyl)-benzanilid mit mehr als der 15fach molaren Menge an konzentrierter Schwefelsäure verestert wird. Mit ähnlich hohen Überschüssen an Schwefelsäure erfolgt die Veresterung in den Beispielen 1 und 2 der deutschen Auslegeschrift 1 206 107 und im Beispiel 1 der deutschen Auslegeschrift 1 206 108.

Es ist weiterhin aus der deutschen Offenlegungsschrift 1 443 877 bekannt, daß man 4-Amino-3'-(β-hydroxyäthylsulfonyl)-benzanilid, in Abgrenzung zu konzenrierter Schwefelsäure als Veresterungsmittel, ausschließlich mittels Amidosulfonsäure und in Pyridin als Lösungsmittel in die entsprechende Schwefelsäurehalbesterverbindung überführen kann. Verwendet wird die Amidosulfonsäure als Sulfatisierungsmittel hierbei gemäß Beispiel 3 in der 3fach äquimolaren Menge. Dies bedeutet zwar eine deutliche Verminderung des Überschusses an Veresterungsmittel, jedoch muß in der Folge das eingesetzte Pyridin unter vermindertem Druck weitgehend abdestilliert werden. Trotzdem gelangt dabei noch etwa ein Viertel dieses intensiv und unangenehm riechenden, wasserlöslichen Pyridins bei der Weiterverarbeitung des Schwefelsäurehalbesters zu dem Azofarbstoff in die Mutterlauge, aus der es entfernt werden muß, damit es nicht in die Abwässer gelangt.

Ebenso wird gemäß dieser deutschen Offenlegungsschrift 1 443 877 die Veresterung anderer aromatischer β-Hydroxyäthylsulfonyl-Verbindungen mittels Amidosulfonsäure gemäß allen Ausführungsbeispielen ausschließlich in Pyridin als organischem Lösungsmittel durchgeführt, obgleich nebenbei auch andere organische Lösemittel, wie Chinolin, Dimethylanilin, Dimethylformamid, allerdings nicht N-Methyl-pyrrolidon, genannt werden. Auch diese einsetzbaren Lösemittel lassen sich nicht einwandfrei aus dem Reaktionsansatz entfernern.

Der Versuch, ohne Lösemittel, und zwar sowohl ohne organische Lösemittel als auch ohne überschüssige Schwefelsäure als Lösemittel, die Veresterung durchzuführen, wurde gemäß der französischen Patentanmeldungs-Veröffentlichung Nr. 2 360 539 gemacht. Hierbei war es jedoch erforderlich, um mit geringen Mengen an Veresterungsmittel (Schwefelsäure, Oleum und Schwefeltrioxid) arbeiten zu können, die Umsetzung in einem Kneter durchzuführen. Solche Kneter sind jedoch für die Vielzahl der technischen Betriebe, für die der Rührkessel das übliche und gängige Reaktionsgefäß ist, nicht zugänglich und müssen erst mit hohen Investitionen angeschafft werden. Aus diesem Grunde bleibt dieses Verfahren in der technischen Ausführung beschränkt.

Es bestand deshalb ein dringender Bedarf nach einem Veresterungsverfahren zur Herstellung solcher β-Sulfatoäthylsulfonyl-aminobenzanilid-Verbindungen, das die Nachteile der Veresterung in Schwefelsäure als Lösungsmittel als auch der Veresterung in Pyridin als Lösungsmittel vermeidet, jedoch die Vorteile des Arbeitens in einem organischen Lösungsmittel und insbesondere vorteilhaft den Einsatz geringer Mengen Veresterungsmittel bietet. Mit der vorliegenden Erfindung wurde solch eine Aufgabe gelöst.

Die vorliegende Erfindung betrifft ein Verfahren zur Herstellung von Verbindungen der allgemeinen Formel (1)

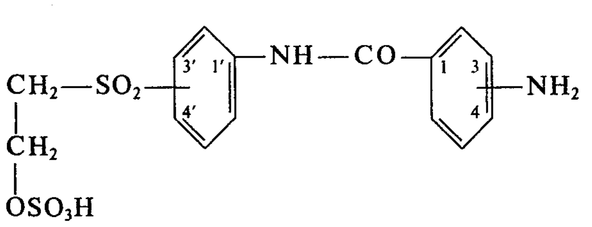

(1)

in welcher die β-Sulfatoäthylsulfonyl-Gruppe in 3'- oder 4'-Stellung des Anilidrestes gebunden ist und die Aminogruppe in 3- oder 4-Stellung des Benzoylrestes steht, durch Sulfatierung einer Verbindung der allgemeinen Formel (2)

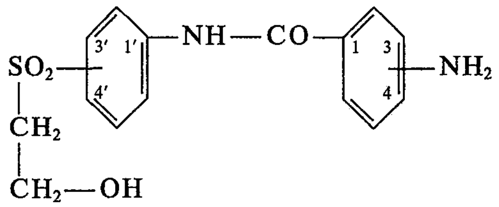

(2)

in welcher die β-Hydroxyäthylsulfonyl-Gruppe in 3'- oder 4'-Stellung des Anilidrestes gebunden ist und die Aminogruppe in 3- oder 4-Stellung des Benzoylrestes steht, in einem organischen Lösungsmittel, das dadurch gekennzeichnet ist, daß die Veresterung in N-Methyl-pyrrolidon als Lösungsmittel und mit Schwefeltrioxid oder Chlorsulfonsäure als Sulfatierungsmittel durchgeführt wird.

Die Verwendung von N-Methyl-pyrrolidon als Lösungsmittel hat den großen Vorteil, das es bei Aufarbeitung des Reaktionsansatzes aus der erhältlichen wäßrigen Phase leicht extrahiert und später leicht destillativ aufgearbeitet werden kann.

Das Schwefeltrioxid kann als Substanz oder in N-Methylpyrrolidon gelöst, ebenso aber auch in konzentrierter Schwefelsäure gelöst, beispielsweise als 30- bis 70gew.-%iges Oleum, in den Reaktionsansatz eingebracht werden.

Die erfindungsgemäße Verfahrensweise, in N-Methylpyrrolidon und mit Schwefeltrioxid oder Chlorsulfonsäure zu arbeiten, hat den Vorteil, daß diese Veresterungsmittel nur in sehr geringen Mengen eingesetzt zu werden brauchen. So kann man diese Sulfatierungsmittel schon in der 2fach molaren Menge, bezogen auf die Ausgangsverbindung der allgemeinen Formel (2), einsetzen. Sehr überraschend ist, daß die Veresterung bereits in hoher Ausbeute mit der äquimolaren Menge an dem Veresterungsmittel erfolgt. Ganz besonders vorteilhaft ist deshalb die Verwendung des Veresterungsmittels zur Ausgangsverbindung der allgemeinen Formel (2) im Molverhältnis von 1 : 1 bis 1,5 : 1, insbesondere sogar von 1 : 1 bis 1,1 : 1. Auch bei diesen sehr geringen Mengen an Veresterungsmittel werden Ausbeuten von über 95% d. Th. erhalten.

Das Arbeiten mit den geringen Mengen an Veresterungsmitteln hat weiterhin den Vorteil, daß bei der Aufarbeitung durch Neutralisation nur eine geringe Menge an Neutralisierungsmittel und somit nur eine geringe Menge an Salzen, wie Sulfaten oder Chloriden, die in dem bisher bekannten Verfahren eine starke Belastung für das Abwasser darstellen, auftreten.

Die erfindungsgemäße Verfahrensweise der Veresterung kann sowohl bei niedrigen als auch bei höheren Temperaturen durchgeführt werden. So kann die Umsetzung bei Temperaturen zwischen 0° C und 120° C erfolgen; vorzugsweise arbeitet man bei einer Temperatur zwischen 20 und 80° C.

Nach Beendigung der Reaktion kann das entstandene homogene Reaktionsgemisch wie folgt aufgearbeitet werden: Man verdünnt es mit Wasser, beispielsweise unter Kühlen oder mit Eiswasser, wobei die Schwefelsäurehalbester-Verbindung der Formel (1) in hoher Ausbeute ausfällt. Sie kann durch Filtration bei anschließendem Waschen mit Wasser als Substanz rein isoliert werden.

Aus dem Filtrat kann nach gegebenenfalls erforderlicher Neutralisation das N-Methyl-pyrrolidon mit einem geeigneten organischen Lösungsmittel, beispielsweise Methylenchlorid, Chloroform oder 1,2-Dichloräthan, exrahiert werden. In diesen wäßrigen Lösungen befinden sich bei der Verwendung der geringen Mengen, insbesondere äquimolaren Mengen, an dem Veresterungsmittel nur geringe Mengen (bzw. gar keine) an Elektrolyten, so bei der Verwendung von Schwefeltrioxid nur geringe Mengen (bzw. gar keine) an Alkalimetallsulfaten oder bei Verwendung von Chlorsulfonsäure nur geringe Mengen an Alkalimetallchloriden, so daß diese »Abwasser« sehr salzarm oder gar salzfrei und praktisch frei an anderen Verunreinigungen anfallen.

Die organische Phase, die bei der Extraktion gewonnen wird und die die organischen extrahierenden Lösungsmittel und das N-Methyl-pyrrolidon enthält, läßt sich anschließend leicht destillativ aufarbeiten, so daß die Lösungsmittel praktisch verlustfrei in den Reaktions- und Aufarbeitungsprozeß zurückgeführt werden können.

Eine weitere Variante der Aufarbeitung des Reaktionsgemisches besteht darin, daß man es ebenso zuerst mit Wasser verdünnt und sodann ein zur Neutralisation der Säure übliches säurebindendes Mittel, wie ein basisch reagierendes Alkalimetallsalz, beispielsweise Natriumcarbonat oder Natriumbicarbonat, bis zu einem pH-Wert zwischen 4,5 und 7 hinzugibt. Anschließend kann diese wäßrige Lösung durch Extraktion mit einem geeigneten organischen Lösungsmittel, wie oben beschrieben, von N-Methylpyrrolidon befreit werden. Man erhält auf diese Weise nach Trennung der Phasen die Verbindungen der allgemeinen Formel (1) in Form einer wäßrigen Lösung ihrer Salze, die, wie oben erläutert, nur geringe Mengen, oder praktisch keine, an Elektrolyten enthalten. Aus diesen wäßrigen Lösungen können die Verbindungen der allgemeinen Formel (1) leicht durch Eindampfen, beispielsweise durch Sprühtrocknung, isoliert werden. Sie fallen auf diese Weise sehr salzarm oder

praktisch salzfrei an, und das »Abwasser« enthält keine Substanzen.

Die Verbindungen der allgemeinen Formel (1) stellen bekannte Zwischenprodukte dar, die beispielsweise als Diazokomponenten zur Herstellung von Azofarbstoffen eingesetzt werden können. Der Vorteil des erfindunsgemäßen Verfahrens, die Verbindungen der Formel (1) in salzarmer bzw. praktisch salzfreier Form zu erhalten, bedeutet einen erheblichen Vorteil bei der Weiterverarbeitung zu solchen Farbstoffen. Bei der Weiterverarbeitung werden dementsprechend die Endprodukte nicht schon mit erheblichen Mengen an Elektrolyten belastet, so daß aus den Farbstofflösungen nach der Synthese der Azofarbstoffe diese Azofarbstoffe nicht durch Elektrolyte, wie Natriumchlorid oder Kaliumchlorid, ausgesalzen werden müssen, sondern durch Eindampfen der Syntheselösungen, beispielsweise durch Sprühtrocknung, daraus isoliert werden können. Es wird somit ein durch das Aussalzen durch Elektrolyte stark belastetes Abwasser ausgeschaltet, und das durch die Sprühtrocknung erhaltene Abwasser enthält keine Substanzen. Darüber hinaus ist der Elektrolytgehalt im so erhältlichen Farbstoffpulver verhältnismäßig gering. Es werden auf diese Weise aus den erfindungsgemäß hergestellten Verbindungen der allgemeinen Formel (1) farbstarke Farbstoffpulver in sehr guter Ausbeute bei ausgezeichneter Qualität und Reinheit erhalten, die in ihren Eigenschaften gegenüber den Farbstoffprodukten, die mit entsprechenden Ausgangsverbindungen aus bisher üblichen Veresterungsverfahren gewonnen wurden, Vorteile bieten, wie insbesondere wegen des verbesserten Veresterungsgrades der β-Hydroxyäthylsulfonylgruppe eine höhere Farbstärke, darüber hinaus eine höhere Löslichkeit in Wasser und eine bessere Farbstoffausbeute. Bei genügend großer Löslichkeit dieser Farbstoffe, die unter Einsatz der erfindungsgemäß hergestellten Verbindungn der Formel (1) synthetisiert wurden, können die aus dieser Synthese anfallenden Farbstofflösungen auch direkt oder nach Einengen auf ein geringeres Volumen für färberische Zwecke eingesetzt werden. Auch dieser Vorteil ist eine Folge des erfindungsgemäßen Verfahrens zur Herstellung der Verbindungen der allgemeinen Formel (1).

Die nachstehenden Beispiele dienen zur Erläuterung der Erfindung. Die Teile sind Gewichtsteile, die Prozentangaben beziehen sich auf Gewichtsprozente, sofern nicht anders vermerkt. Gewichtsteile verhalten sich zu Volumenteilen wie Kilogramm zum Liter.

## Beispiel 1

320 Teile 4-Amino-3'-(β-hydroxyäthylsulfonyl)-benzanilid werden in 600 Volumenteilen N-Mehyl-pyrrolidon angerührt. Bei einer Temperatur von etwa 45°C werden 117 Teile Chlorsulfonsäure unter Rühren innerhalb von etwa 30 Minuten zugetropft. Nach Beendigung der Reaktion (Reaktionszeit etwa 60 Minuten) wird das Reaktionsgemisch mit 1200 Teilen Eiswasser verdünnt. Der gebildete Schwefelsäurehalbester fällt hierbei aus. Er wird nach einiger Zeit abfiltriert und mit Wasser gewaschen und unter reduziertem Druck bei 60° C getrocknet.

Man erhält 380 Teile der Verbindung der Formel

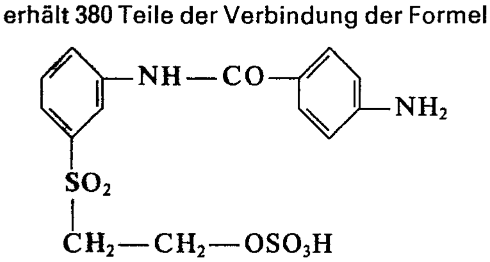

Das Produkt ist frei von Elektrolyten. Die Ausbeute beträgt 95% d. Th. mit einem Veresterungsgrad von 100%.

## Beispiel 2

160 Teile 4-Amino-3'-(β-hydroxyäthylsulfonyl)-benzanilid werden in 300 Volumenteilen N-Methyl-pyrrolidon angerührt und auf eine Temperatur von 50°C erwärmt. Bei dieser Temperatur werden innerhalb von 30 Minuten 40 Teile Schwefeltrioxid hinzugetropft. Nach Ende der Reaktionszeit von etwa 60 Minuten läßt man 600 Teile Eiswasser hinzulaufen. Die erhaltene Lösung wird mit 42 Teilen Natriumbicarbonat neutralisiert. Aus dieser Lösung wird das N-Methyl-pyrrolidon mittels Chloroform extrahiert. Nach Trennung der Phasen erhält man etwa 750 Volumenteile einer wäßrigen Lösung, die 196 Teile des Natriumsalzes der in Beispiel 1 formelmäßig angegebenen Verbindung enthält. Diese kann durch Sprühtrocknung isoliert werden. Es werden 205 Teile eines Pulvers erhalten, das 96% dieses Natriumsalzes enthält. Der Elektrolytgehalt beträgt 3%, der Veresterungsgrad 99,6%. Die Ausbeute beträgt demnach 98% d. Th.

Beispiel 3

40 Teile Schwefeltrioxid werden zu 300 Volumenteilen N-Methyl-pyrrolidon getropft. Unter Rühren werden nunmehr bei einer Temperatur zwischen 40 und 50°C 160 Teile 4-Amino-3'-(β-hydroxyäthylsulfonyl)-benzanilid eingetragen. Die Reaktion ist etwa nach 45 Minuten beendet. Dieses Reaktionsgemisch wird sodann gemäß den Angaben des Beispieles 1 aufgearbeitet. Man erhält 190 Teile der veresterten Verbindung in einer Ausbeute von 95% d. Th. mit einem Veresterungsgrad von 100%.

Verfährt man bei der Aufarbeitung des Reaktionsgemisches gemäß den Angaben des Beispieles 2, so werden etwa 750 Volumenteile einer wäßrigen Lösung erhalten, aus der nach Sprühtrocknung 205 Teile eines Pulvers erhalten werden, das 96% des Natriumsalzes des 4-Amino-3'-(β-sulfatoäthylsulfonyl)-oenzanilid mit einem Elektrolytgehalt von 3% enthält. Der Veresterungsgrad beträgt 99,6%, die Ausbeute 98% d. Th.

Beispiel 4

Man führt die Veresterung gemäß der in Beispiel 2 beschriebenen Verfahrensvariante durch, verwendet jedoch anstelle der 40 Teile Schwefeltrioxid 68 Teile 65%iges Oleum, und arbeitet das Reaktionsprodukt gemäß Beispiel 1 durch Zugabe von Eiswasser auf, so erhält man die in Beispiel 1 formelmäßig angegebene Verbindung, die praktisch elektrolytfrei ist, in einer Ausbeute von 95% d. Th. mit einem Veresterungsgrad von 100%.

Beispiel 5

Verfährt man in erfindungsgemäßer Weise zur Herstellung der Esterverbindungen der allgemeinen Formel (1), beispielsweise in analoger Weise zu den Verfahrensvarianten, die in den Beispielen 1, 2, 3 oder 4 dort für eine Verbindung beschrieben sind, und geht hierbei von 4-Amino-4'-(β-hydroxyäthylsulfonyl)-benzanilid oder von 3-Amin-3'-(β-hydroxyäthylsulfonyl)-benzanilid oder von 3-Amino-4'-(β-hydroxyäthylsulfonyl)-benzanilid als Ausgangsverbindung entsprechend der allgemeinen Formel (2) aus, so erhält man das 4-Amino-4'-(β-sulfatoäthylsulfonyl)-benzanilid bzw. das 3-Amino-3'-(sulfatoäthylsulfonyl)-benzanilid bzw. das 3-Amino-4'-(β-sulfatoäthylsulfonyl)-benzanilid als Veresterungsprodukt mit einem Veresterungsgrad von über 98% und Ausbeuten von über 95% d. Th.

Beispiel 6

40 Teile des gemäß Beispiel 1 hergestellten 4-Amino-3'-(β-sulfatoäthylsulfonyl)-benzanilid werden in 400 Teilen Wasser unter Zugabe einer wäßrigen Natriumcarbonatlösung bei einem pH-Wert von 6,5 bis 7 gelöst. Sodann werden 22 Volumenteile einer wäßrigen 5n-Natriumnitritlösung hinzugegeben. Diese Mischung wird sodann unter Rühren zu einer Mischung von 200 Teilen Eis und 30 Volumenteilen einer 31%igen wäßrigen Salzsäure fließen lassen. Nach einstündigem Rühren wird der Nitritüberschuß mit einem Teil Amidosulfonsäure zerstört. Sodann gibt man als Kupplungskomponente 36,1 Teile 1-Acetylamino-8-hydroxynaphthalin-3,6-disulfonsäure hinzu, wobei mit 10 Teilen kristallisiertem Natriumacetat sowie mit Natriumcarbonat der pH des Kupplungsgemisches innerhalb von 30 Minuten auf den Wert von 5 angehoben wird. Nach beendeter Kupplung wird die Farbstofflösung unter Zusatz von 10 Teilen Kieselgur geklärt und sodann sprühgetrocknet. Man erhält nach Mahlen 115 Teile eines dunkelroten Pulvers, das den Farbstoff der Formel

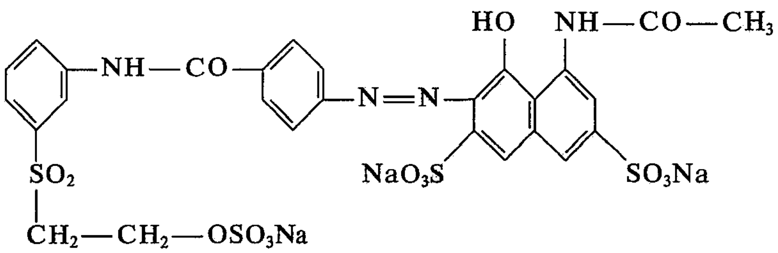

mit einem Elektrolytgehalt von 27% enthält. Dieses Farbstoffpulver liefert auf Cellulosefasermaterial, beispielsweise auf Baumwolle, nach den in der Technik für faserreaktive Farbstoffe üblichen Applikations- und Fixiermethoden brillante, farbstarke, blaustichig rote Färbungen und Drucke von guter Lichtechtheit und sehr guten Naßechtheitseigenschaften.

**Patentansprüche**

1. Verfahren zur Herstellung von Verbindungen der allgemeinen Formel (1)

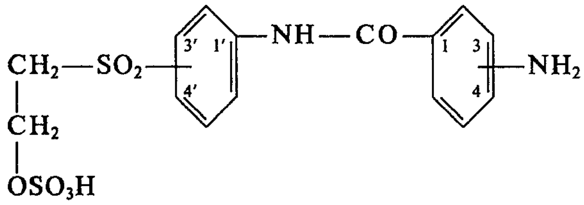

(1)

**in welcher die $\beta$-Sulfatoäthylsulfonyl-Gruppe in 3'- oder 4'-Stellung des Anilidrestes gebunden ist und die Aminogruppe in 3- oder 4-Stellung des Benzoylrestes steht, durch Sulfatierung einer Verbindung der allgemeinen Formel (2)**

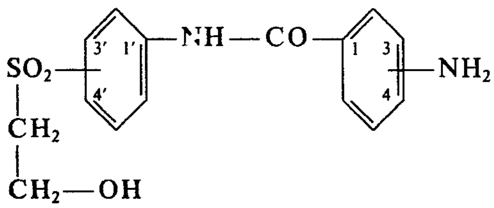

(2)

in welcher die $\beta$-Hydroxyäthylsulfonyl-Gruppe in 3'- oder 4'-Stellung des Anilidrestes gebunden ist und die Aminogruppe in 3- oder 4-Stellung des Benzoylrestes steht, in einem organischen Lösungsmittel, dadurch gekennzeichnet, daß die Veresterung in N-Methyl-pyrrolidon als Lösungsmittel und mit Schwefeltrioxid oder Chlorsulfonsäure als Sulfatierungsmittel durchgeführt wird.

2. Verfahren nach Anspruch 1, dadurch gekennzeichnet, daß das Sulfatierungsmittel in der 1- bis 2fach molaren Menge, bezogen auf die Ausgangsverbindung der allgemeinen Formel (2), eingesetzt wird.

3. Verfahren nach Anspruch 1 oder 2, dadurch gekennzeichnet, daß man die Sulfatierung bei einer Temperatur zwischen 20 und 80°C durchführt.

4. Verwendung der nach Anspruch 1, 2 oder 3 hergestellten Verbindungen als Diazokomponenten ohne Zwischenisolierung zur Synthese von Azofarbstoffen.

**Claims**

1. A process for the preparation of compounds of the general formula (1)

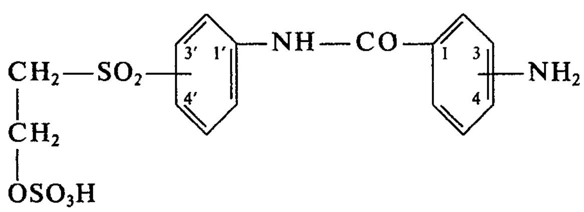

(1)

**in which the $\beta$-sulfatoethylsulfonyl group is bonded in the 3'- or 4'-position of the anilide radical and the amino group is in the 3- or 4-position of the benzoyl radical, by sulfation of a compound of general formula (2)**

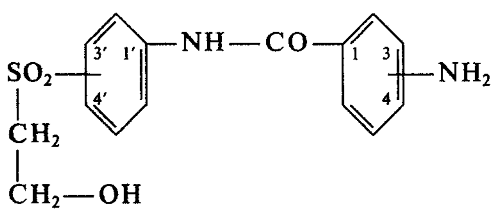

(2)

in which the $\beta$-hydroxyethylsulfonyl group is bonded in the 3'- or 4'-position of the anilide radical and the amino group is in the 3- or 4-position of the benzoyl radical, in an organic solvent, characterized in that the esterification is carried out in N-methyl-pyrrolidone as the solvent and with sulfur trioxide or

chlorosulfonic acid as the sulfating agent.

2. A process according to claim 1, characterized in that the sulfating agent is employed in the 1- to 2-fold molar amount, relative to the starting compound of the general formula (2).

3. A process according to claim 1 or 2, characterized in that sulfation is carried out at a temperature between 20 and 80° C.

4. Use of the compounds prepared according to claim 1, 2 or 3, as diazo components without their intermediate isolation for the synthesis of azo dyestuffs.

## Revendications

1. Procédé de préparation de composés de formule générale (1) ci-dessous:

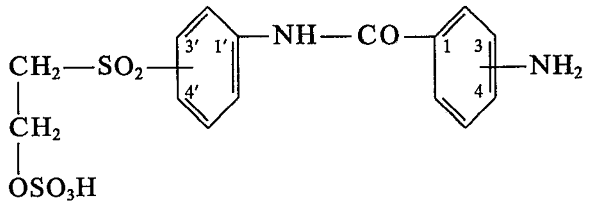

(1)

(dans laquelle le groupe $\beta$-sulfatoéthylsulfonyle occupe la position 3' ou 4' de l'anilide et le groupe amino la position 3 ou 4 du radical benzoyle), par sulfatation d'un composé de formule générale (2):

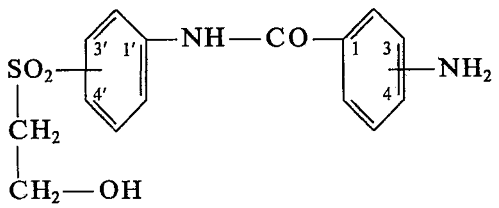

(2)

(le groupe $\beta$-hydroxyéthylsulfonyle occupant la position 3' ou 4' de l'anilide et le groupe amino la position 3 ou 4 du radical benzoyle), au sein d'un solvant organique, procédé caractérisé en ce que l'estérification se fait dans de la N-méthylpyrrolidone comme solvant et avec du trioxyde de soufre ou de l'acide chlorosulfonique comme agent de sulfatation.

2. Procédé selon la revendication 1, caractérisé en ce que l'on ajoute l'agent de sulfatation dans une proportion une à deux fois molaire par rapport au composé de formule (2).

3. Procédé selon la revendication 1 ou 2, caractérisé en ce que l'on effectue la sulfatation à une température comprise entre 20 et 80° C.

4. L'utilisation des composés qui ont été obtenus suivant la revendication 1, 2 ou 3, sans isolement intermédiaire, comme composantes de diazotation pour la synthèse de colorants azoïques.